# EUROPEAN PATENT SPECIFICATION

(11) **EP 1 091 853 B1**
(45) Date of publication and mention of the grant of the patent: **26.11.2003**
(21) Application number: 98933817.3
(22) Date of filing: 16.07.1998
(51) Int. Cl.: B32B 27/40, B32B 27/08, B41M 1/26

(54) **PRINTABLE LAMINATE**
BEDRUCKBARE MEHRSCHICHTFOLIE
STRATIFIE IMPRIMABLE

(30) Priority: 30.06.1998 US 107302
(43) Date of publication of application: 18.04.2001
(73) Proprietor: Hunt Graphics Europe Limited, Basildon, Essex SS14 3BG (GB)
(72) Inventor: COOK, Colin John, Basildon, Essex SS13 2RE (GB)
(74) Representative: Marlow, Nicholas Simon
(86) International application number: GB9802096
(87) International publication number: WO00000352

(56) References cited:
- WO-A-95/06564
- US-A- 5 672 413
- PATENT ABSTRACTS OF JAPAN vol. 096, no. 008, 30 August 1996 & JP 08 099458 A (TEIKOKU INK SEIZO KK;SONY CORP), 16 April 1996

## Description

The present invention relates to the transfer of a printed image onto a target substrate, especially foam board or rigid PVC.

A wide variety of techniques have recently been developed for digitally capturing an image in the form of a computer-readable file, editing the image with the computer, printing the edited image onto a recording medium, and then transferring the image from the recording medium to a target substrate. Such target substrate can be fabric, ceramic, or, in the case of greatest significance for the present invention, foam board or rigid PVC, as used for example, in the commercial graphics industry.

The typical recording medium for receiving and transferring an ink-jet image, has a carrier and at least two of the following layers; a release layer, a protective barrier layer, an image transfer layer, and an adhesive layer. International Application PCT/GB/00481 filed February 16, 1998 for "Transfer Film" describes a carrier and a transfer film which has only one layer. This layer is a mixture of heat-activatable adhesive particles and a binder that also is ink-absorbing, thereby defining a porous matrix. When used for commercial graphics, such transfer film can be adhered to the target substrate without removing the carrier, whereby the carrier remains affixed to and protective of the image.

Through further investigation of the efficacy of the various reagents mentioned in said International Application, it has been discovered that the combination of polyurethane adhesive and a soluble ink absorber in the wet formulation produces a noticeable change in the nature of the porosity of the dry, image-recording layer, and an exceptionally strong bonding not only between the recording layer and the target substrate, but also between the recording layer and the carrier.

The carrier is preferably in the form of a substantially transparent or clear film, with the recording layer carried thereon presenting a relatively homogeneous, filmic surface for receiving and absorbing the ink. This combination of carrier and recording layer can be considered a printable laminate, i.e., it can record an image created through common printing techniques, most suitably, ink-jet printing techniques, and it can then be permanently laminated in its entirety to a target substrate, utilizing a conventional range of laminating temperatures and pressures.

The carrier can be any transparent or clear material compatible with the materials of the recording layer and capable of withstanding the heat and pressure of the laminating process. The carrier must also adhere to the recording layer sufficiently well after lamination and provide adequate protection of the underlying image printed on the image recording layer. The materials suitable for use as the carrier include cast films such as those made from polyolefin, polyesters, nylon and polyvinyl chloride. Polyesters, polyolefins and polyvinyl chloride appear to have particular suitability as the carrier of the present invention.

The polyurethane and the ink absorber together comprise at least 90%, and preferably at least 95% of the dry weight of the recording layer with optionally one or more defoamers and wetting agents comprising at least some of the balance of the dry weight of the recording layer. The polyurethane typically comprises at least 50% of the dry weight of the image recording layer, while the ink absorber comprises at least 30% of the dry weight of the recording layer.

The polyurethane for use in the invention is preferably an aqueous dispersion of polyurethane which, if dried, forms a film of material. Upon application of heat and optionally pressure, the polyurethane is able to form an adhesive bond to other surfaces. In addition, it is preferable for the purposes of this invention that the polyurethane in combination with the ink absorptive material does not form a matrix of particles. To this end it is most preferable that the polyurethane have a small strand-like conformation so that in combination, the polyurethane and ink absorber form a more homogenous mixture. A polyurethane strand size of around 0.2 microns appears to be highly suitable for making the film. The polyurethane dispersion sold under the trademark Luphen D DS 3507 and available from BASF Corp, Mount Olive, New Jersey is particularly suitable for use in this invention.

The ink absorber is preferably a modified cellulose material and more preferably is a thermoplastic modified cellulose material. Suitable ink absorbers include hydroxypropyl cellulose and cellulose gum. Utilizing a thermoplastic ink absorber material permits plasticizing (softening) of the absorber at the temperatures in the range in which the laminate is bonded to a substrate. It is believed that this assists the laminate in making better contact with and improves adhesion to the substrate.

One particular thermoplastic modified cellulose of utility in the invention is Klucel E modified cellulose powder, commercially available from Hercules, Wilmington, Delaware. Other suitable materials include Blanose cellulose gum (sodium carboxymethylcellulose) and Glascol DP6 (cationically charged water-soluble polymer). Typically, the ink absorber is a very fine particulate material which, when dissolved in water, is of a molecular size. The dry particle size for a material such as Klucel E is estimated to be in the range of 0.003-0.2 microns. It will be appreciated that these ink absorptive materials may work with a variety of inks, dyes and image forming (printing) processes. However, it has been found that these ink absorber materials work particularly well with the ink-jet printing process and ink-jet inks, especially those inks which are dye-based and which are in water-based or water and glycol-based systems.

The defoaming and wetting agents for use in the invention are surfactants which may be anionic, cationic or nonionic in nature. The surfactants are intended to serve one or more functions in the invention, including: reducing bubble or foam formation in the image recording layer; promoting adequate wetting out and uniform formation of the recording layer on the carrier and promoting ink or dye absorption and diffusion in the carrier layer. Non-limiting examples of suitable surfactants for use in the invention include the nonionic surfactant sold under the trademark Pluronic PE6100, and the anionic surfactant sold under the trademark Lumiten I-AFK, both of which are commercially available from BASF Corp., Mount Olive, New Jersey.

The recording layer is preferably formed by mixing in a water-based system: (a) an aqueous polyurethane dispersion; with (b) a water-soluble, powdered ink absorber; and (c) one or more defoamer/wetting agents. This mixture is coated onto the carrier film, and dried below the minimum film forming temperature (MFFT) of the polyurethane dispersion.

Accordingly, the invention in one aspect is a printable laminate comprising a substantially transparent film carrier having opposite first and second sides; a thermoplastic recording layer having an inner surface directly supported by one of said sides of the carrier and an exposed outer surface for receiving printing ink; wherein said recording layer comprises a heat activatable polyurethane adhesive and ink absorber which together constitute at least 90% of the total weight of the recording layer and is applied to the carrier as a wet formulation.

In another aspect of the invention a printed laminate comprises a substantially transparent film carrier having opposite first and second sides; a substantially clear thermoplastic recording layer having an inner surface directly supported by one of said sides of the carrier and an exposed outer surface, said recording layer comprising a polyurethane heat activatable adhesive and an ink absorber which together constitute at least 90% of the total weight of the recording layer and are applied to the carrier as a wet formulation; and an ink pattern printed on said recording layer and extending from the outer surface to the inner surface of the recording layer.

In another aspect of the invention a method of producing substantially permanent image on a substantially flat target surface, comprises selecting a printable laminate consisting of a substantially transparent film carrier having opposite first and second sides, and a substantially homogeneous recording layer comprising polyurethane heat-activatable adhesive and ink absorber which together constitute at least 90% of the total weight of the recording layer and are applied as a wet formulation, wherein said recording layer has an inner surface directly supported by the first side of the carrier, and an exposed outer surface; printing ink in a pattern onto the exposed surface of the recording layer, wherein said ink diffuses through the layer to the inner surface of the layer without substantial alteration of said pattern; placing the outer surface of the printable laminate on said target surface; and applying heat and pressure to the second surface of the carrier, thereby permanently adhering the outer surface of the recording layer to the target surface and the carrier to the inner surface of the recording layer.

One embodiment of the invention will be described below with reference to the accompanying drawings, wherein
**FIG.1** shows the printable laminate according to the invention, with an ink pattern printed thereon; and
**FIG.2** shows schematically how the printed laminate is used to decorate a target substrate.

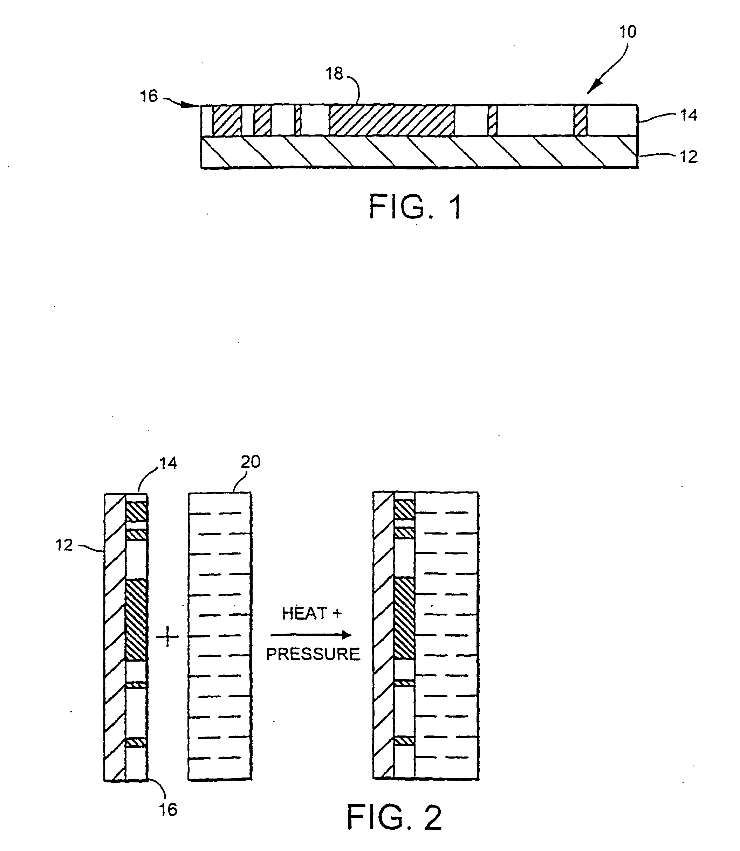

Figure 1 shows the printable laminate 10 according to the invention, consisting essentially of a substantially transparent carrier film 12 having first and second surfaces, and a recording layer 14 having an inner surface directly covering the first surface of the carrier film, and outer exposed surface. An image 16 has been printed on the exposed surface of layer 14, as by an ink-jet printer (not shown), resulting in a pattern of distinct ink deposits such as 18, which have diffused through the thickness of the layer 14 without substantial degradation.

As shown in Figure 2, the outer surface of the printed laminate 10 is placed on a target surface of, e.g., a foam board or rigid sheet of PVC 20, and permanently adhered thereto by the application of heat and pressure through the second surface of the carrier film 12. According to the invention, this heat and pressure also permanently adheres the first surface of the carrier film to the inner surface of the recording layer. This provides a protective covering for the printed image, without significantly affecting the observed quality of the image.

It should be understood that the temperature and pressure conditions associated with the process shown in Figure 2, are within the range of convention, as is described in the material incorporated herein by reference. It should also be understood that the term "permanent" with reference to adhesion, means the useful life of the decorated board or sheet 20 under normal care and handling.

The carrier is preferably a 50-micron clear polyester, polyvinyl chloride or polypropylene film, which requires no special surface treatment. In particular, no melt transfer or release layer is provided.

The recording layer 12 is constituted on a weight basis, as follows:

| **Material** | **Function** | **General Percent** | **Preferred Percent** |
|---|---|---|---|
| Polyurethane | Heat activated adhesive | 50-70 | 60-65, esp. 61.50 |
| Hydroxypropyl Cellulose | Thermoplastic ink absorber | 30-50 | 30-35, esp. 34.65 |
| Ethylene Oxide-Propylene Oxide Copolymer | Nonionic surfactant | 0-5 | 1-2, esp. 1.73 |
| Sulfated Fatty Acid | Anionic surfactant | 0-5 | 2-3, esp. 2.12 |

The recording layer is initially formulated as a coatable mixture, wherein the coating for the especially preferred layer is constituted on a weight basis as follows:

| **Material** | **Form or Function** | **Percentage** |
|---|---|---|
| Luphen D DS 3507 | Polyurethane dispersion in water | 28.06 |
| Klucel E | Water-soluble modified cellulose powder | 7.11 |
| Pluronic PE6100 | Defoamer/wetting agent | 0.36 |
| Lumiten I-AFK | Wetting agent | 0.79 |
| Water | Diluent | 63.68 |

The resins in the foregoing formulation are preferably of an extremely fine size (in the range of about 0.003 - 0.2 microns), i.e., generally finer than the particle size range of 0.08-3 micron described in said International Application. As a result, upon drying of the coating at a temperature below the MFFT of the adhesive dispersion a filmic yet microporous recording layer is formed. It is believed that the adhesive and absorber mix substantially randomly at the molecular level, providing substantial homogeneity of the recording layer, rather than a porous matrix of distinct adhesive particulates bound together by the absorber. The clarity of the coating upon drying, may also be attributable to this intimate homogeneity.

This surprising result is believed to arise at least in part by the larger number of water molecules that form the polyurethane polymer, being replaced by molecules of the absorber material, as the coating is dried.

The advantages of laminates according to the invention include (1) sharper printing resolution on the recording layer, (2) clarity of the recording layer, and (3) the high adhesive strength of polyurethane for holding the recording layer to the target surface and the carrier to the recording layer. The drying temperature is held below the MFFT of the adhesive dispersion. For example, the MFFT of the polyurethane dispersion Luphen D DS 3507 is about 60°C and the heat activation temperature of the entire laminate is typically in the range of 75° to 125°C.

## Claims

1. A printable laminate comprising :
a substantially transparent film carrier having opposite first and second sides;
a thermoplastic recording layer having an inner surface directly supported by one of said sides of the carrier and an exposed outer surface for receiving printing ink;
wherein the recording layer comprises a heat activatable polyurethane adhesive and an ink absorber which together constitute at least 90% of the total weight of the recording layer and is applied to the carrier as a wet formulation.

2. A printable laminate according to claim 1, wherein the polyurethane weight is at least 50% of the total weight of the recording layer.

3. A printable laminate according to claim 1 or 2, wherein the polyurethane weight is in the range of about 50-70 weight % of the total weight of the recording layer.

4. A printable laminate according to any preceding claim wherein the ink absorber is at least 30% of the total weight of the recording layer.

5. A printable laminate according to any preceding claim wherein the heat activatable polyurethane adhesive and ink absorber together constitute at least 95% of the total weight of the recording layer.

6. A printable laminate according to any preceding claim wherein the ink absorber is a modified cellulose.

7. A printable laminate according to any preceding claim wherein the ink absorber is one or more members selected from the group consisting of hydroxypropyl cellulose or sodium carboxymethyl cellulose.

8. A printable laminate according to any preceding claim wherein the ink absorber is a cationically charged water-soluble polymer.

9. A printable laminate according to any preceding claim wherein the recording layer comprises:
polyurethane in the range of about 60-65 weight %;
hydroxypropyl cellulose in the range of about 30-35 weight %; and
up to about 5% surfactants.

10. A printable laminate according to any preceding claim, wherein the carrier is one of clear polyester or clear polypropylene film.

11. A printable laminate according to any preceding claim, wherein the recording layer is substantially clear.

12. A printed laminate comprising :
a printable laminate according to any of claims 1 to 11; and
an ink pattern printed on the recording layer and extending from the outer surface to the inner surface of the recording layer.

13. A printed laminate comprising :
a substantially transparent film carrier having opposite first and second sides;
a substantially clear thermoplastic recording layer having an inner surface directly supported by one of said sides of the carrier and an exposed outer surface, said recording layer comprising a polyurethane heat activatable adhesive and an ink absorber which together constitute at least 90% of the total weight of the recording layer and are applied to the carrier as a wet formulation; and
an ink pattern printed on said recording layer and extending from the outer surface to the inner surface of the recording layer.

14. A printed laminate according to claim 13, wherein the heat activatable adhesive is polyurethane having a strand size of about 0.2 microns and constituting at least 50% of the weight of the recording layer exclusive of ink.

15. A printed laminate according to claim 13 or 14 wherein the thermoplastic ink absorber is at least 30% of the total weight of the recording layer exclusive of ink.

16. A method of producing a substantially permanent image on a substantially flat target surface comprising the steps of :
a] selecting a printable laminate consisting of a substantially transparent film carrier having opposite first and second sides, and a substantially homogeneous recording layer comprising polyurethane heat-activatable adhesive and ink absorber which together constitute at least 90% of the total weight of the recording layer and are applied to the carrier as a wet formulation, wherein said recording layer has an inner surface directly supported by the first side of the carrier, and an exposed outer surface;
b] printing ink in a pattern onto the exposed surface of the recording layer, whereby said ink diffuses through the later to the inner surface of the layer without substantial alteration of said pattern;
c] placing the outer surface of the printable laminate on said target surface; and
d] applying heat and pressure to the second surface of the carrier, thereby
permanently adhering the outer surface of the recording layer to the target surface and the carrier to the inner surface of the recording layer.

17. A method according to claim 16, wherein the heat-activatable adhesive is polyurethane.

18. A method according to claim 17 wherein before the step of printing, the recording layer is substantially clear.

19. A method according to claim 17 or 18, wherein the target surface is one of foam board or rigid PVC.

## Patentansprüche

1. Bedruckbares Laminat, das Folgendes umfasst:
einen im Wesentlichen transparenten Folienträger mit einer ersten und einer dieser gegenüber liegenden zweiten Seite;
eine thermoplastische Aufzeichnungsschicht mit einer Innenfläche, die direkt auf einer der genannten Seiten des Trägers liegt, und einer exponierten Außenfläche zum Aufnehmen von Druckfarbe;
wobei die Aufzeichnungsschicht einen wärmeaktivierbaren Polyurethanklebstoff und einen Farbabsorber umfasst, die zusammen wenigstens 90% des Gesamtgewichts der Aufzeichnungsschicht ausmachen und als Nassformulierung auf den Träger aufgebracht werden.

2. Bedruckbares Laminat nach Anspruch 1, wobei das Polyurethangewicht wenigstens 50% des Gesamtgewichts der Aufzeichnungsschicht beträgt.

3. Bedruckbares Laminat nach Anspruch 1 oder 2, wobei das Polyurethangewicht etwa 50 bis 70 Gew.-% des Gesamtgewichts der Aufzeichnungsschicht beträgt.

4. Bedruckbares Laminat nach einem der vorherigen Ansprüche, wobei der Farbabsorber wenigstens 30% des Gesamtgewichts der Aufzeichnungsschicht ausmacht.

5. Bedruckbares Laminat nach einem der vorherigen Ansprüche, wobei der wärmeaktivierbare Polyurethanklebstoff und der Farbabsorber zusammen wenigstens 95% des Gesamtgewichts der Aufzeichnungsschicht ausmachen.

6. Bedruckbares Laminat nach einem der vorherigen Ansprüche, wobei der Farbabsorber modifizierte Cellulose ist.

7. Bedruckbares Laminat nach einem der vorherigen Ansprüche, wobei der Farbabsorber ein oder mehrere Mitglieder ausgewählt aus der Gruppe bestehend aus Hydroxypropylcellulose oder Natriumcarboxymethylcellulose ist.

8. Bedruckbares Laminat nach einem der vorherigen Ansprüche, wobei der Farbabsorber ein kationisch geladenes wasserlösliches Polymer ist.

9. Bedruckbares Laminat nach einem der vorherigen Ansprüche, wobei die Aufzeichnungsschicht Folgendes umfasst:
Polyurethan im Bereich von etwa 60-65 Gew.-%;
Hydroxypropylcellulose im Bereich von etwa 30-35 Gew.-%; und
bis zu etwa 5% Tenside.

10. Bedruckbares Laminat nach einem der vorherigen Ansprüche, wobei der Träger klares Polyester oder klare Polypropylenfolie ist.

11. Bedruckbares Laminat nach einem der vorherigen Ansprüche, wobei die Aufzeichnungsschicht im Wesentlichen klar ist.

12. Bedrucktes Laminat, das Folgendes umfasst:
ein bedruckbares Laminat nach einem der Ansprüche 1 bis 11; und
ein Farbmuster, das auf die Aufzeichnungsschicht aufgedruckt ist und von der Außenfläche zur Innenfläche der Aufzeichnungsschicht verläuft.

13. Bedrucktes Laminat, das Folgendes umfasst:
einen im Wesentlichen transparenten Folienträger mit einer ersten und einer dieser gegenüber liegenden zweiten Seite;
eine im Wesentlichen klare thermoplastische Aufzeichnungsschicht mit einer Innenfläche, die direkt auf einer der genannten Seiten des Trägers liegt, und einer exponierten Außenfläche, wobei die genannte Aufzeichnungsschicht einen wärmeaktivierbaren Polyurethanklebstoff und einen Farbabsorber umfasst, die zusammen wenigstens 90% des Gesamtgewichts der Aufzeichnungsschicht ausmachen und als Nassformulierung auf den Träger aufgebracht werden; und
ein Farbmuster, das auf die Aufzeichnungsschicht aufgedruckt ist und von der Außenfläche zur Innenfläche der Aufzeichnungsschicht verläuft.

14. Bedrucktes Laminat nach Anspruch 13, wobei der wärmeaktivierbare Klebstoff Polyurethan mit einer Stranggröße von etwa 0,2 Mikron ist und wenigstens 50% des Gewichts der Aufzeichnungsschicht ausschließlich Farbe ausmacht.

15. Bedrucktes Laminat nach Anspruch 13 oder 14, wobei der thermoplastische Farbabsorber wenigstens 30% des Gesamtgewichtes der Aufzeichnungsschicht ausschließlich Farbe ausmacht.

16. Verfahren zur Herstellung eines im Wesentlichen permanenten Bildes auf einer im Wesentlichen flachen Zielfläche, umfassend die folgenden Schritte:
a) Wählen eines bedruckbaren Laminats, bestehend aus einem im Wesentlichen transparenten Folienträger mit einer ersten und einer dieser gegenüber liegenden zweiten Seite sowie einer im Wesentlichen homogenen Aufzeichnungsschicht, umfassend wärmeaktivierbaren Polyurethanklebstoff und Farbabsorber, die zusammen wenigstens 90% des Gesamtgewichts der Aufzeichnungsschicht ausmachen und als Nassformulierung auf die Aufzeichnungsschicht aufgebracht werden, wobei die genannte Aufzeichnungsschicht eine Innenfläche, die direkt auf der ersten Seite des Trägers liegt, und eine exponierte Außenfläche aufweist;
b) Drucken von Farbe in einem Muster auf die exponierte Fläche der Aufzeichnungsschicht, so dass die genannte Farbe durch die Letztere zur Innenfläche der Schicht diffundiert, ohne das genannte Muster erheblich zu verändern;
c) Legen der Außenfläche des bedruckbaren Laminats auf die genannte Zielfläche; und
d) Beaufschlagen der zweiten Fläche des Trägers mit Wärme und Druck, um dadurch
die Außenfläche der Aufzeichnungsschicht permanent auf die Zielfläche und den Träger auf die Innenfläche der Aufzeichnungsschicht zu kleben.

17. Verfahren nach Anspruch 16, wobei der wärmeaktivierbare Klebstoff Polyurethan ist.

18. Verfahren nach Anspruch 17, bei dem die Aufzeichnungsschicht vor dem Druckschritt im Wesentlichen klar ist.

19. Verfahren nach Anspruch 17 oder 18, bei dem die Zielfläche entweder eine Schaumstoffplatte oder starres PVC ist.

## Revendications

1. Laminé imprimable comprenant :
un support en film sensiblement transparent ayant un premier et un deuxième côtés opposés;
une couche d'enregistrement thermoplastique ayant une surface intérieure supportée directement par l'un desdits côtés du support et une surface extérieure exposée pour recevoir de l'encre d'imprimerie;
où la couche d'enregistrement comprend un adhésif au polyuréthane activable thermiquement et un absorbeur d'encre qui constituent ensemble 90% au moins du poids total de la couche d'enregistrement, et est appliquée au support en tant que formulation à l'état humide.

2. Laminé imprimable selon la revendication 1, où le poids du polyuréthane représente 50% au moins du poids total de la couche d'enregistrement.

3. Laminé imprimable selon la revendication 1 ou 2, où le poids du polyuréthane est dans la plage d'environ 50 - 70% en poids du poids total de la couche d'enregistrement.

4. Laminé imprimable selon l'une quelconque des revendications précédentes, où l'absorbeur d'encre représente 30% au moins du poids total de la couche d'enregistrement.

5. Laminé imprimable selon l'une quelconque des revendications précédentes, où l'adhésif au polyuréthane activable thermiquement et l'absorbeur d'encre constituent ensemble 95% au moins du poids total de la couche d'enregistrement.

6. Laminé imprimable selon l'une quelconque des revendications précédentes, où l'absorbeur d'encre est une cellulose modifiée.

7. Laminé imprimable selon l'une quelconque des revendications précédentes, où l'absorbeur d'encre est un ou plusieurs membres sélectionnés parmi le groupe consistant en hydroxypropyl-cellulose ou en carboxyméthyl-cellulose sodique.

8. Laminé imprimable selon l'une quelconque des revendications précédentes, où l'absorbeur d'encre est un polymère à charge cationique soluble dans l'eau.

9. Laminé imprimable selon l'une quelconque des revendications précédentes, où la couche d'enregistrement comprend :
du polyuréthane dans la plage d'environ 60 - 65% en poids;
de l'hydroxypropyl-cellulose dans la plage d'environ 30 - 35% en poids; et
jusqu'à environ 5% de tensioactifs.

10. Laminé imprimable selon l'une quelconque des revendications précédentes, où le support est un film polyester transparent ou un film polypropylène transparent.

11. Laminé imprimable selon l'une quelconque des revendications précédentes, où la couche d'enregistrement est sensiblement transparente.

12. Laminé imprimé comprenant :
un laminé imprimable selon l'une quelconque des revendications 1 à 11; et
un motif d'encre imprimé sur la couche d'enregistrement et s'étendant de la surface r extérieure à la surface intérieure de la couche d'enregistrement.

13. Laminé imprimé comprenant :
un support en film sensiblement transparent ayant un premier et un deuxième côtés opposés;
une couche d'enregistrement thermoplastique sensiblement transparente ayant une surface intérieure directement supportée par l'un desdits côtés du support et une surface extérieure exposée, ladite couche d'enregistrement comprenant un adhésif au polyuréthane activable thermiquement et un absorbeur d'encre qui constituent ensemble 90% au moins du poids total de la couche d'enregistrement et qui sont appliqués au support en tant que formulation à l'état humide; et
un motif d'encre imprimé sur ladite couche d'enregistrement et s'étendant de la surface extérieure à la surface intérieure de la couche d'enregistrement.

14. Laminé imprimé selon la revendication 13, où l'adhésif activable thermiquement est un polyuréthane ayant une taille de brin d'environ 0,2 micron et constituant 50% au moins du poids de la couche d'enregistrement à l'exclusion de l'encre.

15. Laminé imprimé selon la revendication 13 ou 14, où l'absorbeur d'encre thermoplastique représente 30% au moins du poids total de la couche d'enregistrement à l'exclusion de l'encre.

16. Procédé de production d'une image sensiblement permanente sur une surface cible sensiblement plate comprenant les étapes consistant à :
a] sélectionner un laminé imprimable consistant en un support en film sensiblement transparent ayant un premier et un deuxième côtés opposés, et une couche d'enregistrement sensiblement homogène comprenant un adhésif au polyuréthane activable thermiquement et un absorbeur d'encre qui constituent ensemble 90% au moins du poids total de la couche d'enregistrement et qui sont appliqués au support en tant que formulation à l'état humide, où ladite couche d'enregistrement a une surface intérieure directement supportée par le premier côté du support et une surface extérieure exposée;
b] imprimer de l'encre selon un motif sur la surface exposée de la couche d'enregistrement, en vertu de quoi l'encre se diffuse à travers la couche dans la surface intérieure de la couche sans modifier sensiblement ledit motif;
c] placer la surface extérieure du laminé imprimable sur ladite surface cible; et
d] appliquer chaleur et pression à la deuxième surface du support,
faisant ainsi adhérer de manière permanente la couche extérieure de la couche d'enregistrement à la surface cible, et le support à la surface intérieure de la couche d'enregistrement.

17. Procédé selon la revendication 16, où l'adhésif activable thermiquement est du polyuréthane.

18. Procédé selon la revendication 17, où préalablement à l'étape d'impression, la couche d'enregistrement est sensiblement transparente.

19. Procédé selon la revendication 17 ou 18, où la surface cible est un panneau mousse ou du PVC rigide.
